# EUROPEAN PATENT SPECIFICATION

(11) **EP 3 674 424 B1**
(45) Date of publication and mention of the grant of the patent: **16.11.2022**
(21) Application number: 18847480.3
(22) Date of filing: 02.07.2018
(51) Int. Cl.: C21C 7/00, C21C 5/00, C21C 7/068, C21C 7/076, C21C 7/06, C21C 7/10

(54) **SMELTING METHOD FOR ULTRA-LOW CARBON 13CR STAINLESS STEEL**
SCHMELZVERFAHREN FÜR 13CR-EDELSTAHL MIT EXTREM NIEDRIGEM KOHLENSTOFFGEHALT
PROCÉDÉ DE FUSION POUR ACIER INOXYDABLE À TENEUR ULTRABASSE EN CARBONE 13CR

(30) Priority: 25.08.2017 CN 201710739301
(43) Date of publication of application: 01.07.2020
(73) Proprietor: Baoshan Iron & Steel Co., Ltd., Shanghai 201900 (CN)
(72) Inventor: XU, Yingtie, Shanghai 201900 (CN); CHEN, Zhaoping, Shanghai 201900 (CN); YANG, Baoquan, Shanghai 201900 (CN); YANG, Guangwei, Shanghai 201900 (CN)
(74) Representative: Kuhnen & Wacker Patent- und Rechtsanwaltsbüro PartG mbB
(86) International application number: PCT/CN2018/094002
(87) International publication number: WO 2019/037544

(56) References cited:
- EP-A1- 0 881 304
- CN-A- 102 329 920
- CN-A- 104 164 606
- CN-A- 104 789 738
- CN-A- 106 834 607
- JP-A- H07 173 515
- KR-A- 20020 001 434
- US-A- 4 417 924
- Springorum: "Slag Atlas", , 1 September 1995 (1995-09-01), XP055749160, Retrieved from the Internet: URL:https://en.stahl-online.de/ [retrieved on 2020-11-11]
- TAN, MIN: "Research on Process of Dehydrogenation from Stainless Steel by VOD Refining", Special Steel Technology, vol. 23, no. 1, 1 January 2017 (2017-01-01), pages 36-38, XP055679882, ISSN: 1674-0971, DOI: 10.16683/J.CNKI.ISSN1674-0971.2017.1008
- LIU, JIANHUI et al.: "A Study on Transformation of Inclusions of CaO-Al2O3 -SiO2-MgO System in Stainless Steel ZG06Cr13Ni4Mo with EAF-LF-VOD-Casting Flow Sheet", Special Steel, vol. 32, no. 3, 1 June 2011 (2011-06-01), pages 28-32, XP009519597, ISSN: 1003-8620

## Description

### Technical Field

The present invention relates to a smelting method, in particular to a smelting method for a type of steel.

### Background Art

13Cr stainless steel for oil casings mainly involves 4 types of martensitic stainless steel with grades L80-13Cr, BG13Cr-110, BG13Cr-95S and BG13Cr-110S. L80-13Cr is a typical oil casing product suitable for use in a wet CO₂ environment and has an excellent CO₂ corrosion resistance. Ultra-low carbon 13Cr (BG13Cr-95S and BG13Cr-110S, as main types of steel) is developed from L80-13Cr, and has a further reduced C content, which is generally required to be less than or equal to 0.03%. The Ultra-low carbon 13Cr includes a further optimized alloy composition and enjoys improved comprehensive mechanical properties, as well as good anti-corrosion property.

CN 101 397 637 A discloses a highly carbon dioxide and trace hydrogen sulfide corrosion-resistant 13Cr steel for oil casings and a manufacturing method therefor; however, the technical solution disclosed in this patent does not involve any specific explanation of how to smelt such a type of steel.

CN 104 789 738 A provides a method for less slag smelting of ultrapure ferrite stainless steel. The method reduces VOD treatment cost, shortens the vacuum treatment time, stably controls the carbon content of the molten steel smaller than 60 ppm, and realizes low cost and high efficiency VOD smelting of the ultrapure ferrite stainless steel.

JP H07 173515 A teaches a refining method capable of suppressing the formation of Cr oxidation loss at the time of oxygen blowing decarburization and efficiently executing decarburization down to an extra-low carbon region at the time of self-decarburization under a vacuum in decarburization refining of a stainless steel.

CN 106 834 607 A discloses a refining process method capable of increasing the proportion of equiaxed grains of a continuously-cast ferritic stainless steel blank and belongs to the field of stainless steel smelting and casting.

EP 0 881 304 A1 teaches a combination of a decarburization method and a refining method.

Since a low carbon content is required in this patent, the smelting method may refer to a VOD smelting method for an ultra-pure ferritic stainless steel. However, the type of steel involved in this patent has much higher requirements for inclusions and oxygen content than the ultra-pure ferritic stainless steel, wherein the diameter of point-like, or termed as globular, Ds inclusions is generally required to be less than 30µm, and the oxygen content is required to be stably less than or equal to 35ppm. In addition, in order to enhance the resistance to erosion, the content of calcium oxide in the inclusions in the type of steel involved in this patent is required to be as low as possible.

A conventional VOD smelting method for an ultra-pure ferritic stainless steel is as follows: drossing is carried out prior to a VOD treatment which starts at a temperature of 1580-1600°C in order to ensure that the temperature of molten steel after oxygen blowing is about 1720°C (which should not be too high or too low). After a steel ladle is in place, argon gas is properly adjusted to control the flow rate at 30-50 NL/min, wherein it is expedient that argon stirring just exposes the surface of molten steel (which is the exposed surface after drossing). For controlling the amount of molten steel to be treated by VOD, the free space of the steel ladle is controlled to 1000-1200 mm; the total amount of blown oxygen during VOD is calculated based on the composition after LF; after oxygen blowing is stopped, a further vacuum carbon deoxidation (VCD) treatment is required which is generally required to last more than 10 min. Subsequently, a reduction operation is started, wherein certain proportions of ferrosilicon and aluminum blocks are used to reduce the molten steel, and certain amounts of lime, dolomite and fluorite are added to adjust a slag, with the basicity, i.e. CaO/SiO₂ content ratio, of the slag being controlled to 1.0-3.5, which represents a medium or low basicity slag, wherein during addition, they are proportionally adjusted according to the actual situation of the steel slag. The reduction stage is maintained under high vacuum condition for 10 min or more to ensure deoxygenation and removal of inclusions. After the reduction period is ended, the vacuum is broken and alloy fine adjustment is carried out, wherein for nitrogen-containing types of steel, nitrogen should be blown or a nitrogen-containing alloy should be added to increase the content of nitrogen. Finally, the content of aluminum is adjusted, a calcium treatment is carried out, and it is weakly stirred for 15 min and then cast.

The conventional VOD smelting method for an ultra-pure ferritic stainless steel as described above has the following shortcomings:
1) the process route necessarily involves a calcium treatment; otherwise, blockage of a continuous casting tundish nozzle may be easily caused during production due to an inclusion problem; in addition, the difficulty in the control of Ds inclusions is increased after the calcium treatment, wherein Ds inclusions are often larger than 30µm, which may result in tiny cracks on the material, thereby reducing the erosion resistance of the material; furthermore, where the content of calcium in the inclusions is increased after the calcium treatment, the erosion resistance of the material may also be reduced; and
2) due to the high content of oxygen in slag, it is not easy to accurately control the oxygen content during the smelting process, and the oxygen content is often more than 50 ppm, which affects the purity of the steel.

In view of this, a smelting method is expected to overcome the above shortcomings of the conventional techniques and obtain an ultra-low carbon 13Cr stainless steel with an excellent performance by means of smelting. Such smelting method has a simple process and can stably cast the stainless steel without any calcium treatment.

### Summary of the Invention

One of the objectives of the present invention is to provide a smelting method for an ultra-low carbon 13Cr stainless steel. The method realizes a stable control of Ds inclusions and the content of oxygen in molten steel and successful casting of the steel without involving a calcium treatment, thereby improving the erosion resistance of the ultra-low carbon 13Cr stainless steel during use and prolonging the service life thereof.

Based on the above-mentioned object of the present invention, the present invention provides a smelting method as defined in claim 1. Further improvments are subject to the dependent claim.

Compared with conventional smelting processes including ultra-pure ferritic stainless steel smelting, the technical solution of the present invention employs smelting in a high basicity slag manner and controls the mass ratio of CaO to Al₂O₃ in the slag to appropriately 1.6-2.4, so that the slag has better flow properties, and since the high basicity slag has a low oxygen potential, molten steel recarburization easily occurs. Therefore, in the technical solution of the present invention, the addition amount of Al₂O₃ is controlled to such an extent that the mass ratio of CaO to Al₂O₃ is 1.6-2.4, so that the mass percentage of aluminum in the steel after deoxygenation is ≤ 0.005%, so as to ensure that the molten steel still has an oxygen content sufficient to prevent the molten steel from recarburization; in addition, since the mass percentage content of carbon in the final finished ultra-low carbon 13Cr stainless steel is ≤ 0.03%, which is not a lower range, i.e. less than 0.01%, required for the ultra-pure ferritic stainless steel, the use of the high basicity slag to simultaneously control the mass percentage content of aluminum in the molten steel in the smelting method of the present invention can well ensure that the content of carbon in the molten steel does not exceed standards even in the case of molten steel recarburization. After a high basicity slag system (i.e. the mass ratio of CaO to Al₂O₃ in the slag is controlled to 1.6-2.4) is used, the fluidity of the slag is further guaranteed, while the slag deoxygenation capability and the aluminum oxide inclusion adsorption capability are also improved, which provides a strong guarantee for subsequent deoxygenation and the control of Ds inclusions.

In the above-mentioned solution, in step (5), the temperature and composition of the molten steel are measured, and aluminum wires are fed according to the measured composition, so that the mass percentage of aluminum is controlled at 0.03-0.06% at this time, and if this type of steel contains titanium, titanium wires can be fed.

Conventional process means generally involve adding aluminum and iron to increase aluminum in step (4) of the present invention; however, due to the slow melting of aluminum and iron, deoxygenation easily results in the generation of more inclusions; however, as compared with conventional processes, aluminum wires are fed into the molten steel for deoxygenation after the vacuum is broken in step (4) in the technical solution of the present invention, and feeding in with aluminum wires at this time for deoxygenation can generate aggregated easily removable Ds inclusions under the condition of a higher content of oxygen in the molten steel. In addition, the measurement of the temperature and composition of the molten steel in step (5) provides accurate information for how to operate in the next step. Moreover, controlling the mass percentage content of aluminum between 0.03% and 0.06% is not only a requirement for the production of this type of steel, but is also intended to improve the rate of reception of titanium during the titanium wire feeding process for producing a titanium-containing steel.

In the technical solution of the present invention, setting step (5), i.e. the vacuum treatment, after step (5) is a major inventive step of the present invention, because continuous casting is generally started with weak stirring after feeding in with aluminum wires in the prior art, whereas the present invention requires to continue a vacuum treatment, because the inventors of the present invention have discovered that the vacuum condition results in a greater force of stirring of the molten steel, and the strong stirring force can further promote the inclusions in the molten steel to collide with each other and grow up, thereby effectively removing the inclusions; in addition, under vacuum condition, even if the surface of the molten steel is exposed due to stirring, no new inclusions caused by secondary oxidation will be produced. In addition, the vacuum treatment may produce some inclusions containing a small amount of calcium; however, compared with the calcium treatment of the conventional processes, the content of calcium in the inclusions of the present invention is much lower and is generally less than 20% by mass. These inclusions are harmless to 13Cr stainless steel for oil casings; however, the content of calcium in the inclusions after the calcium treatment of the conventional processes is often more than 30%, which not only results in easy formation of large globular Ds inclusions, but is also adverse to the erosion resistance of the material.

In the technical solution of the present invention, deoxygenation is intended to feed in with aluminum wires under high oxygen condition in order to produce aggregated Ds inclusions, and the subsequent vacuum treatment further promotes the collision and growth thereof, thus effectively removing such high melting point inclusions and realizing the smooth casting of the final molten steel. In addition, due to the effective removal of the inclusions, the mass percentage content of oxygen in the molten steel is reduced, the Ds inclusions can be controlled without any calcium treatment in the subsequent procedure.

In the solution provided by the present invention, the main purpose of adding the composite slagging balls is to form a liquid slag bath in advance to facilitate the dissolution of the lime, and the composition of the composite slagging balls is mainly set for easy melting of those with a low melting point and also contains a small amount of MgO in order to meet the requirements for the MgO content of the final slag. The addition amount of the composite slagging balls is 20-40% of that of the lime, mainly on account of facilitating lime slagging, and the lime may be added in batches to avoid slagging difficulties. Aluminum and ferrosilicon are determined by excess oxygen remaining in steel after deoxygenation and decarburization, in order to ensure that the mass percentage content of Cr₂O₃ in the slag after deoxygenation and slagging is completed is less than 1%. This is the basic requirement for the deoxygenation of the slag.

In step (4), the mass percentages of the components of the composite slagging balls are defined. In addition to the comprehensive consideration of the effects between these components, the main purpose of controlling the mass percentage of MgO is to prevent a refractory material from erosion. Since the refractory material of the present invention is a low-carbon refractory material, the slag has a certain degree of infiltration to the refractory material. However, when MgO is added to the slag, the mass percentage thereof is increased. And as for a high basicity slag, the erosion to the furnace lining is reduced.

Furthermore, in steps (1), (3), (4) and (6) of the smelting method of the present invention, the flow rate of argon gas for bottom blowing stirring may be controlled to 200-1000 NL/min.

Furthermore, in the smelting method of the present invention, a bottom blowing port used in a ladle may be configured to have two bottom blowing ports, wherein each bottom blowing port is positioned at a distance from the center of the ladle that is 1/2-1/3 of the radius of the bottom surface of the ladle, and the included angle between lines connecting the two bottom blowing ports to the center of the ladle is 120-150°.

In the above-mentioned solution, the position of the bottom blowing nozzle of the ladle is defined as above to ensure the coupling of a bottom blowing flow field to a flow field formed by oxygen blowing decarburization, so as to improve the decarburization efficiency.

Furthermore, in the smelting method of the present invention, the ultra-low carbon 13Cr stainless steel contains Ti element, and step (5) may further comprise feeding titanium wires in this step.

It should be noted that in the technical solution of the present invention, a low-carbon magnesium-carbon brick refractory material can be used, in which the mass percentage of carbon is controlled to ≤ 5%. The purpose of such setting is to prevent serious recarburization during the vacuum treatment. As the high basicity slag is used in the present invention, the above-mentioned refractory material effectively avoids serious erosion of a slag line during application.

By using the smelting method for an ultra-low carbon 13Cr stainless steel of the present invention, stable casting of molten steel under the condition of smelting without any calcium treatment can be realized, thereby realizing stable control of Ds inclusions and the content of oxygen in the molten steel; in addition, the smelting method improves the erosion resistance of the ultra-low carbon 13Cr stainless steel during use and prolonging the service life thereof.

In addition, the ultra-low carbon 13Cr stainless steel obtained by the present invention is stably controlled to have no more than 30 µm of Ds inclusions and a total oxygen content of ≤ 30 ppm.

### Detailed Description of Embodiments

The smelting method for an ultra-low carbon 13Cr stainless steel of the present invention is further explained and described below in conjunction with particular examples. However, the explanation and description are not intended to unduly limit the technical solution of the present invention.

### Examples 1-6

The type of steels obtained in examples 1 and 4 is BG13Cr-110S, the type of steels obtained in examples 2, 3, 5 and 6 is BG13Cr-95S, wherein BG13Cr-95S refers to a titanium-containing type of steel. Table 1 lists the initial composition of the molten steel in each example.

**Table 1 (wt%, the balance being Fe and other inevitable impurities)**

| | C | Si | Cr | Mo | Mn | P | Al |
|---|---|---|---|---|---|---|---|
| Example 1 | 0.07 | 0.17 | 12.7 | 1.2 | 0.36 | 0.01 | 0.001 |
| Example 2 | 0.09 | 0.23 | 12.7 | 1.88 | 0.4 | 0.0105 | 0.001 |
| Example 3 | 0.03 | 0.28 | 12.9 | 1.9 | 0.3 | 0.009 | 0.001 |
| Example 4 | 0.08 | 0.22 | 12.8 | 1.2 | 0.4 | 0.015 | 0.001 |
| Example 5 | 0.05 | 0.23 | 12.8 | 1.85 | 0.45 | 0.0115 | 0.001 |
| Example 6 | 0.04 | 0.20 | 12.76 | 1.87 | 0.35 | 0.008 | 0.001 |

### Example 1

In this example, the requirements for a VOD refining apparatus are as follows: the apparatus can process 150t of molten steel, the vacuum degree for VOD smelting is < 100Pa, and the refractory material of a ladle is a low-carbon magnesium-carbon brick with a carbon content of 4%. The type of steel to be smelted is BG13Cr-110S and the amount of molten steel is 149000kg. The specific steps are as follows:
1) Molten steel is subjected to drossing and then VOD smelting, wherein the initial composition of the molten steel is: 0.07% of C, 0.17% of Si, 12.7% of Cr, 1.2% of Mo, 0.36% of Mn, 0.010% of P, 0.001% of Al, and the balance being Fe and trace impurity elements, and the initial temperature is 1620°C;
2) A vacuum decarburization treatment is carried out, wherein an oxygen blowing decarburization treatment is first carried out, with the total amount of blown oxygen being controlled to 650 Nm³, a vacuum carbon deoxidation treatment is then carried out under high vacuum condition, with the high vacuum pressure being less than 500 Pa and the treatment time being 13 min, and after the treatment is completed, the temperature of the molten steel is 1670°C and the carbon content is 0.0086%;
3) 2 t of lime, 600 kg of composite slagging balls, 600 kg of aluminum blocks, and 200 kg of ferrosilicon containing 75% of silicon are added under vacuum condition, wherein the composition of the composite slagging balls is made up of: 30% of Al₂O₃, 50% of CaO, 10% of SiO₂, 7% of MgO, and 3% of the remaining impurity components; after slagging is completed, the composition of the slag is made up of: 53% of CaO, 7.4% of SiO₂, 31% of Al₂O₃, 8% of MgO, and 0.5% of Cr₂O₃, wherein the basicity of the slag is 7.2 and the mass ratio of CaO to Al₂O₃ in the slag is 1.7; and the overall treatment time is 12 min, and after the treatment is completed, the steel is measured to have a carbon content of 0.012% and an aluminum content of 0.004%;
4) Vacuum breaking is carried out, wherein the temperature of the molten steel is measured to be 1620°C, a sample is taken to analyze the composition of the molten steel, and 50 kg of aluminum wires is fed in by means of a wire feeder;
5) A vacuum treatment is continued, with a vacuum pressure of less than 2000 Pa, wherein during the vacuum treatment, 20 kg of micro-carbon ferrochromium according to the measured composition of a sample, and a high vacuum treatment is then carried out, wherein the vacuum pressure is less than 200 Pa and the treatment time is 10 min; and
6) Secondary vacuum breaking is carried out, wherein the temperature is measured to be 1570°C when the treatment is ended, a sample is then taken for analysis, and if the composition is qualified, weak stirring is then carried out for 15 min, followed by casting on a casting platform.

In this example, the flow rate for bottom stirring is controlled at 800 NL/min, and when the vacuum is lower than 500 Pa, the flow rate of bottom blowing is reduced to 400800 NL/min. Bottom blowing is carried out with double ports, wherein the distance between each bottom blowing port and the center is 1/2 of the radius of the bottom surface of the ladle, and the included angle between lines connecting each of the two ports to the central point is 140°.

### Example 2

In this example, the requirements for a VOD refining apparatus are as follows: the apparatus can process 150 t of molten steel, the limit vacuum degree is less than 100 Pa, and the refractory material of a ladle is a low-carbon magnesium-carbon brick with a carbon content of 4%. The type of steel to be smelted is BG13Cr-95S and the amount of molten steel is 150000 kg. The steps are as follows:
1) Molten steel is subjected to drossing and then VOD smelting, wherein the initial composition of the molten steel is: 0.09% of C, 0.23% of Si, 12.7% of Cr, 1.88% of Mo, 0.4% of Mn, 0.0105% of P, 0.001% of Al, and the balance being Fe and trace impurity elements, and the initial temperature is 1600°C;
2) A vacuum decarburization treatment is carried out, wherein an oxygen blowing decarburization treatment is first carried out, with the total amount of blown oxygen being controlled to 750 Nm³, a vacuum carbon deoxidation treatment is then carried out under high vacuum condition, with the high vacuum pressure being less than 500 Pa and the treatment time being 15 min, and after the treatment is completed, the temperature of the molten steel is 1680°C and the carbon content is 0.0074%;
3) 2.4 t of lime, 500 kg of composite slagging balls, 600 kg of aluminum blocks, and 174 kg of ferrosilicon containing 75% of silicon are added under vacuum condition, wherein the composition of the composite slagging balls is made up of: 30% of Al₂O₃, 40% of CaO, 20% of SiO₂, 7% of MgO, and 3% of the remaining impurity components; after slagging is completed, the composition of the slag is made up of: 56% of CaO, 7.0% of SiO₂, 29% of Al₂O₃, 6% of MgO, and 0.7% of Cr₂O₃, wherein the basicity of the slag is 8 and the mass ratio of CaO to Al₂O₃ in the slag is 2; and the overall treatment time is 15 min, and after the treatment is completed, the steel is measured to have a carbon content of 0.010% and an aluminum content of 0.0046%;
4) Vacuum breaking is carried out, wherein the temperature of the molten steel is measured to be 1635°C, a sample is taken to analyze the composition of the molten steel, and 50 kg of aluminum wires and then 240 kg of titanium wires are fed in by means of a wire feeder;
5) A vacuum treatment is continued, with a vacuum pressure of less than 2000 Pa, wherein during the vacuum treatment, 5 kg of micro-carbon ferrochromium according to the measured composition of a sample, and a high vacuum treatment is then carried out, wherein the vacuum pressure is less than 200 Pa and the treatment time is 15 min; and
6) Secondary vacuum breaking is carried out, wherein the temperature is controlled to be 1565°C measured at the end of the treatment, a sample is then taken for analysis, and if the composition is qualified, weak stirring is then carried out for 12 min, followed by casting on a casting platform.

In this example, the flow rate for bottom stirring is controlled at 600 NL/min, and when the vacuum is lower than 500 Pa, the flow rate of bottom blowing is reduced to 300 NL/min. Bottom blowing is carried out with double ports, wherein the distance between each bottom blowing port and the center is 1/3 of the radius of the bottom surface of the ladle, and the included angle between lines connecting each of the two ports to the central point is 120°.

### Example 3

In this example, the requirements for a VOD refining apparatus are as follows: the apparatus can process 150 t of molten steel, the limit vacuum degree is less than 100 Pa, and the refractory material of a ladle is a low-carbon magnesium-carbon brick with a carbon content of 4%. The type of steel to be smelted is BG13Cr-95S and the amount of molten steel is 150000 kg. The steps are as follows:
1) sMolten steel is subjected to drossing and then VOD smelting, wherein the initial composition of the molten steel is: 0.03% of C, 0.28% of Si, 12.9% of Cr, 1.9% of Mo, 0.3% of Mn, 0.009% of P, 0.001% of Al, and the balance being Fe and trace impurity elements, and the initial temperature is 1630°C;
2) A vacuum decarburization treatment is carried out, wherein an oxygen blowing decarburization treatment is first carried out, with the total amount of blown oxygen being controlled to 600 Nm³, a vacuum carbon deoxidation treatment is then carried out under high vacuum condition, with the high vacuum pressure being less than 500 Pa and the treatment time being 20 min, and after the treatment is completed, the temperature of the molten steel is 1650°C and the carbon content is 0.0069%;
3) 1.8 t of lime, 500 kg of composite slagging balls, 630 kg of aluminum blocks, and 72 kg of ferrosilicon containing 75% of silicon are added under vacuum condition, wherein the composition of the composite slagging balls is made up of: 40% of Al₂O₃, 50% of CaO, 5% of SiO₂, 4% of MgO, and 1% of the remaining impurity components; after slagging is completed, the composition of the slag is made up of: 58% of CaO, 11.5% of SiO₂, 26% of Al₂O₃, 6% of MgO, and 0.3% of Cr₂O₃, wherein the basicity of the slag is 5 and the mass ratio of CaO to Al₂O₃ in the slag is 2.2; and the overall treatment time is 10min, and after the treatment is completed, the steel is measured to have a carbon content of 0.009% and an aluminum content of 0.005%;
4) Vacuum breaking is carried out, wherein the temperature of the molten steel is measured to be 1615°C, a sample is taken to analyze the composition of the molten steel, and 55 kg of aluminum wires and then 220 kg of titanium wires are fed in by means of a wire feeder;
5) A vacuum treatment is continued, with a vacuum pressure of less than 2000 Pa, wherein during the vacuum treatment, no alloy needs to be added according to the measured composition of a sample, and a high vacuum treatment is then carried out, wherein the vacuum pressure is less than 200 Pa and the treatment time is 6 min; and
6) Secondary vacuum breaking is carried out, wherein the temperature is controlled to be 1580°C measured at the end of the treatment, a sample is then taken for analysis, and if the composition is qualified, weak stirring is then carried out for 20 min, followed by casting on a casting platform.

In this example, the flow rate for bottom stirring is controlled at 1000 NL/min, and when the vacuum is lower than 500 Pa, the flow rate of bottom blowing is reduced to 500 NL/min. Bottom blowing is carried out with double ports, wherein the distance between each bottom blowing port and the center is 5/12 of the radius of the bottom surface of the ladle, and the included angle between lines connecting each of the two ports to the central point is 120°.

### Example 4

In this example, the requirements for a VOD refining apparatus are as follows: the apparatus can process 150 t of molten steel, the vacuum degree for VOD smelting is < 100 Pa, and the refractory material of a ladle is a low-carbon magnesium-carbon brick with a carbon content of 5%. The type of steel to be smelted is BG13Cr-110S and the amount of molten steel is 151000 kg. The specific steps are as follows:
1) Molten steel is subjected to drossing and then VOD smelting, wherein the initial composition of the molten steel is: 0.08% of C, 0.22% of Si, 12.8% of Cr, 1.2% of Mo, 0.4% of Mn, 0.015% of P, 0.001% of Al, and the balance being Fe and trace impurity elements, and the initial temperature is 1610°C;
2) A vacuum decarburization treatment is carried out, wherein an oxygen blowing decarburization treatment is first carried out, with the total amount of blown oxygen being controlled to 680 Nm³, a vacuum carbon deoxidation treatment is then carried out under high vacuum condition, with the high vacuum pressure being less than 500 Pa and the treatment time being 14min, and after the treatment is completed, the temperature of the molten steel is 1675°C and the carbon content is 0.0077%;
3) 2.1 t of lime, 620 kg of composite slagging balls, 600 kg of aluminum blocks, and 210 kg of ferrosilicon containing 75% of silicon are added under vacuum condition, wherein the composition of the composite slagging balls is made up of: 35% of Al₂O₃, 50% of CaO, 5% of SiO₂, 7% of MgO, and 3% of the remaining impurity components; after slagging is completed, the composition of the slag is made up of: 53% of CaO, 6.4% of SiO₂, 30% of Al₂O₃, 8% of MgO, and 0.5% of Cr₂O₃, wherein the basicity of the slag is 8.2 and the mass ratio of CaO to Al₂O₃ in the slag is 1.77; and the overall treatment time is 12 min, and after the treatment is completed, the steel is measured to have a carbon content of 0.010% and an aluminum content of 0.005%;
4) Vacuum breaking is carried out, wherein the temperature of the molten steel is measured to be 1625°C, a sample is taken to analyze the composition of the molten steel, and 55kg of aluminum wires is fed in by means of a wire feeder;
5) A vacuum treatment is continued, with a vacuum pressure of less than 2000 Pa, wherein during the vacuum treatment, 10 kg of micro-carbon ferrochromium according to the measured composition of a sample, and a high vacuum treatment is then carried out, wherein the vacuum pressure is less than 200 Pa and the treatment time is 12 min; and
6) Secondary vacuum breaking is carried out, wherein the temperature is measured to be 1575°C when the treatment is ended, a sample is then taken for analysis, and if the composition is qualified, weak stirring is then carried out for 17 min, followed by casting on a casting platform.

In this example, the flow rate for bottom stirring is controlled at 800 NL/min, and when the vacuum is lower than 500 Pa, the flow rate of bottom blowing is reduced to 400800 NL/min. Bottom blowing is carried out with double ports, wherein the distance between each bottom blowing port and the center is 1/2 of the radius of the bottom surface of the ladle, and the included angle between lines connecting each of the two ports to the central point is 150°.

### Example 5

In this example, the requirements for a VOD refining apparatus are as follows: the apparatus can process 150 t of molten steel, the limit vacuum degree is less than 100 Pa, and the refractory material of a ladle is a low-carbon magnesium-carbon brick with a carbon content of 5%. The type of steel to be smelted is BG13Cr-95S and the amount of molten steel is 150000 kg. The steps are as follows:
1) Molten steel is subjected to drossing and then VOD smelting, wherein the initial composition of the molten steel is: 0.05% of C, 0.23% of Si, 12.8% of Cr, 1.85% of Mo, 0.45% of Mn, 0.0115% of P, 0.001% of Al, and the balance being Fe and trace impurity elements, and the initial temperature is 1630°C;
2) A vacuum decarburization treatment is carried out, wherein an oxygen blowing decarburization treatment is first carried out, with the total amount of blown oxygen being controlled to 550 Nm³, a vacuum carbon deoxidation treatment is then carried out under high vacuum condition, with the high vacuum pressure being less than 500 Pa and the treatment time being 15 min, and after the treatment is completed, the temperature of the molten steel is 1670°C and the carbon content is 0.0079%;
3) 2.0 t of lime, 460 kg of composite slagging balls, 500 kg of aluminum blocks, and 184 kg of ferrosilicon containing 75% of silicon are added under vacuum condition, wherein the composition of the composite slagging balls is made up of: 30% of Al₂O₃, 45% of CaO, 15% of SiO₂, 7% of MgO, and 3% of the remaining impurity components; after slagging is completed, the composition of the slag is made up of: 55% of CaO, 8.0% of SiO₂, 28% of Al₂O₃, 7% of MgO, and 0.7% of Cr₂O₃, wherein the basicity of the slag is 6.9 and the mass ratio of CaO to Al₂O₃ in the slag is 2; and the overall treatment time is 14min, and after the treatment is completed, the steel is measured to have a carbon content of 0.009% and an aluminum content of 0.0032%;
4) Vacuum breaking is carried out, wherein the temperature of the molten steel is measured to be 1630°C, a sample is taken to analyze the composition of the molten steel, and 45 kg of aluminum wires and then 250 kg of titanium wires are fed in by means of a wire feeder;
5) A vacuum treatment is continued, with a vacuum pressure of less than 2000 Pa, wherein during the vacuum treatment, 15 kg of micro-carbon ferrochromium according to the measured composition of a sample, and a high vacuum treatment is then carried out, wherein the vacuum pressure is less than 200 Pa and the treatment time is 15 min; and
6) Secondary vacuum breaking is carried out, wherein the temperature is controlled to be 1563°C measured at the end of the treatment, a sample is then taken for analysis, and if the composition is qualified, weak stirring is then carried out for 15 min, followed by casting on a casting platform.

In this example, the flow rate for bottom stirring is controlled at 600 NL/min, and when the vacuum is lower than 500 Pa, the flow rate of bottom blowing is reduced to 300 NL/min. Bottom blowing is carried out with double ports, wherein the distance between each bottom blowing port and the center is 1/3 of the radius of the bottom surface of the ladle, and the included angle between lines connecting each of the two ports to the central point is 135°.

### Example 6

In this example, the requirements for a VOD refining apparatus are as follows: the apparatus can process 150 t of molten steel, the limit vacuum degree is less than 100 Pa, and the refractory material of a ladle is a low-carbon magnesium-carbon brick with a carbon content of 4.5%. The type of steel to be smelted is BG13Cr-95S and the amount of molten steel is 150000 kg. The steps are as follows:
1) Molten steel is subjected to drossing and then VOD smelting, wherein the initial composition of the molten steel is: 0.04% of C, 0.20% of Si, 12.76% of Cr, 1.87% of Mo, 0.35% of Mn, 0.008% of P, 0.001% of Al, and the balance being Fe and trace impurity elements, and the initial temperature is 1630°C;
2) A vacuum decarburization treatment is carried out, wherein an oxygen blowing decarburization treatment is first carried out, with the total amount of blown oxygen being controlled to 570 Nm³, a vacuum carbon deoxidation treatment is then carried out under high vacuum condition, with the high vacuum pressure being less than 500 Pa and the treatment time being 18 min, and after the treatment is completed, the temperature of the molten steel is 1660°C and the carbon content is 0.0059%;
3) 1.9 t of lime, 490 kg of composite slagging balls, 530 kg of aluminum blocks, and 90 kg of ferrosilicon containing 75% of silicon are added under vacuum condition, wherein the composition of the composite slagging balls is made up of: 40% of Al₂O₃, 50% of CaO, 5% of SiO₂, 4% of MgO, and 1% of the remaining impurity components; after slagging is completed, the composition of the slag is made up of: 56% of CaO, 9.5% of SiO₂, 26% of Al₂O₃, 10% of MgO, and 0.3% of Cr₂O₃, wherein the basicity of the slag is 5.9 and the mass ratio of CaO to Al₂O₃ in the slag is 2.1; and the overall treatment time is 12 min, and after the treatment is completed, the steel is measured to have a carbon content of 0.008% and an aluminum content of 0.004%;
4) Vacuum breaking is carried out, wherein the temperature of the molten steel is measured to be 1625°C, a sample is taken to analyze the composition of the molten steel, and 50 kg of aluminum wires and then 210 kg of titanium wires are fed in by means of a wire feeder;
5) A vacuum treatment is continued, with a vacuum pressure of less than 2000 Pa, wherein during the vacuum treatment, no alloy needs to be added according to the measured composition of a sample, and a high vacuum treatment is then carried out, wherein the vacuum pressure is less than 200 Pa and the treatment time is 7 min; and
6) Secondary vacuum breaking is carried out, wherein the temperature is controlled to be 1570°C measured at the end of the treatment, a sample is then taken for analysis, and if the composition is qualified, weak stirring is then carried out for 20 min, followed by casting on a casting platform.

In this example, the flow rate for bottom stirring is controlled at 1000 NL/min, and when the vacuum is lower than 500 Pa, the flow rate of bottom blowing is reduced to 400 NL/min. Bottom blowing is carried out with double ports, wherein the distance between each bottom blowing port and the center is 5/12 of the radius of the bottom surface of the ladle, and the included angle between lines connecting each of the two ports to the central point is 120°.

Table 2 lists the inclusion detection results for each example.

**Table 2**

| | Diameter of Ds inclusions (µm) | Oxygen content (ppm) |
|---|---|---|
| Example 1 | 20 | 25 |
| Example 2 | 15 | 29 |
| Example 3 | 20 | 20 |
| Example 4 | 15 | 30 |
| Example 5 | 13 | 22 |
| Example 6 | 15 | 28 |

It should be noted that the prior art part in the scope of protection of the present invention is not limited to the embodiments given in the application document, and all the prior art which is not inconsistent with the solution of the present invention, including but not limited to earlier patent documents, earlier published publications, earlier published uses, etc. , can be included in the scope of protection of the present invention.

In addition, the mode of combination of the technical features of the present invention is not limited to the modes of combination as described in the claims of the present invention or the modes of combination as described in the specific embodiments, and all the technical features disclosed in the present invention can be freely combined or incorporated in any way, unless there is contradiction among them.

It should also be noted that those listed above are only specific embodiments of the present invention, and obviously, the present invention is not limited to the above examples and may accordingly have many similar changes. All variations which can be directly derived from or associated with the content disclosed in the present invention by a person skilled in the art should be covered by the scope of protection of the present invention as defined in the appendant claims.

## Claims

1. A smelting method for an ultra-low carbon 13Cr stainless steel having ≤ 0.03 % by mass of C and 12.5-13.5 % by mass of Cr, **characterized in that** the smelting method does not involve a calcium treatment step and comprises the steps of:
(1) subjecting molten steel to drossing and then VOD smelting, wherein the initial temperature of the molten steel is 1600-1650 °C, and the vacuum degree during the VOD smelting is < 100 Pa;
(2) carrying out an oxygen blowing decarburization treatment, wherein the amount of blown oxygen is controlled to 4-6.5 Nm³/t;
(3) carrying out a vacuum carbon deoxidation (VCD) under high vacuum condition, wherein the high vacuum pressure is < 500 Pa; wherein the time of the treatment of the vacuum decarburization is 10-20 min, and after the vacuum decarburization treatment is completed, the temperature of the molten steel is 1650-1680 °C;
(4) carrying out vacuum slagging and deoxygenation, wherein the basicity of a slag defined as a CaO/SiO₂ content ratio is 5-10, and the mass ratio of CaO to Al₂O₃ in the slag is 1.6-2.4, wherein lime, composite slagging balls, aluminum blocks and ferrosilicon are used for slagging and deoxygenation, wherein the composition of the composite slagging balls is made up of the following components: in percentage by mass, 30-40 % of Al₂O₃, 40-50 % of CaO, 5-20 % of SiO₂, and 6-12 % of MgO, wherein the addition amount of the composite slagging balls is 20-40 % of that of the lime, and wherein the vacuum pressure is controlled to < 2000 Pa and the treatment time is 10-15 min;
(5) carrying out vacuum breaking, wherein aluminum wires are fed in this step, and wherein the mass percentage of aluminum is controlled at 0.03-0.06 %;
(6) carrying out a vacuum treatment, wherein the vacuum pressure is < 2000 Pa, the treatment time is 5-15 min, and the temperature of the molten steel after the treatment is completed is 1560-1580 °C; and
(7) carrying out secondary vacuum breaking;
wherein in steps (1), (3), (4) and (6), the flow rate of argon gas for bottom blowing stirring is controlled to 200-1000 NL/min.

2. The smelting method for an ultra-low carbon 13Cr stainless steel of claim 1, **characterized in that** a bottom blowing port used in a ladle is configured to have two bottom blowing ports, wherein each bottom blowing port is positioned at a distance that is 1/2-1/3 of the radius of the bottom surface of the ladle away from the center of the ladle, and the included angle between lines connecting each of the two bottom blowing ports to the center of the ladle is 120-150°.

3. The smelting method for an ultra-low carbon 13Cr stainless steel of claim 1 or 2, **characterized in that** the ultra-low carbon 13Cr stainless steel contains Ti element, and step (5) further comprises feeding titanium wires in this step.

## Patentansprüche

1. Schmelzverfahren für einen extrem kohlenstoffarmen 13Cr-Edelstahl mit ≤ 0,03 Masseprozent an C und 12,5-13,5 Masseprozent an Cr, **dadurch gekennzeichnet, dass** das Schmelzverfahren keinen Kalziumbehandlungsschritt beinhaltet und die folgenden Schritte aufweist:
1) Unterziehen des geschmolzenen Stahls einem Krätzen und dann VOD-Schmelzen, wobei die Anfangstemperatur des geschmolzenen Stahls 1600-1650 °C beträgt, und der Vakuumgrad während des VOD-Schmelzens < 100 Pa beträgt;
2) Durchführen einer Sauerstoffblasentkohlungsbehandlung, wobei die Menge des geblasenen Sauerstoffs auf 4-6,5 Nm³/t gesteuert wird;
3) Durchführen einer Vakuumkohlenstoffdesoxidation (VCD) unter einer Hochvakuumbedingung, wobei der Hochvakuumdruck < 500 Pa beträgt; wobei die Zeit der Vakuumentkohlungsbehandlung 10-20 Minuten beträgt, und die Temperatur des geschmolzenen Stahls nach Beendigung der Vakuumentkohlungsbehandlung 1650-1680 °C beträgt;
4) Durchführen eines Vakuum-Abschlackens und eines Sauerstoffentzugs, wobei die Basizität einer Schlacke als ein CaO/SiO₂-Gehaltsverhältnis 5-10 beträgt, und das Masseverhältnis von CaO zu Al₂O₃ in der Schlacke 1,6-2,4 beträgt, wobei Kalk, Verbundschlackekugeln, Aluminiumblöcke und Ferrosilizium für das Abschlacken und den Sauerstoffentzug verwendet werden, wobei die Zusammensetzung der Verbundschlackekugeln aus den folgenden Bestandteilen besteht: in Masseprozent, 30-40 % an Al₂O₃, 40-50 % an CaO, 5-20 % an SiO₂ und 6-12 % an MgO, wobei die Beigabemenge der Verbundschlackekugeln 20-40 % derjenigen des Kalks ist, und wobei der Vakuumdruck auf < 2000 Pa gesteuert wird und die Behandlungszeit 10-15 Minuten beträgt;
5) Durchführen einer Vakuumunterbrechung, wobei Aluminiumdrähte in diesem Schritt zugeführt werden, und wobei der Masseanteil von Aluminium auf 0,03-0,06 % gesteuert wird;
6) Durchführen einer Vakuumbehandlung, wobei der Vakuumdruck < 2000 Pa beträgt, die Behandlungszeit 5-15 Minuten beträgt und die Temperatur des geschmolzenen Stahls nach Beendigung der Behandlung 1560-1580 °C beträgt; und
7) Durchführen einer sekundären Vakuumunterbrechung;
wobei in den Schritten (1), (3), (4) und (6) die Strömungsrate von Argongas zum Zweck des Bodenblasrührens auf 200-1000 NL/min gesteuert wird.

2. Schmelzverfahren für einen extrem kohlenstoffarmen 13Cr-Edelstahl nach Anspruch 1, **dadurch gekennzeichnet, dass** ein Bodenblasanschluss, der in einer Pfanne verwendet wird, so konfiguriert ist, dass er zwei Bodenblasanschlüsse aufweist, wobei jeder Bodenblasanschluss in einer Entfernung, die 1/2-1/3 des Radius der Bodenfläche der Pfanne von der Mitte der Pfanne entfernt beträgt, positioniert ist, und der eingeschlossene Winkel zwischen Geraden, die jeden der zwei Bodenblasanschlüsse mit der Mitte der Pfanne verbinden, 120-150° beträgt.

3. Schmelzverfahren für einen extrem kohlenstoffarmen 13Cr-Edestahl nach Anspruch 1 oder 2, **dadurch gekennzeichnet, dass** der extrem kohlenstoffarme 13Cr-Edelstahl das Element Titan enthält und Schritt (5) ferner ein Zuführen von Titandrähten in diesem Schritt enthält.

## Revendications

1. Procédé de fusion pour un acier inoxydable 13Cr à très faible teneur en carbone ayant ≤ 0,03 % en masse de C et 12,5-13,5 % en masse de Cr, **caractérisé en ce que** le procédé de fusion n'implique pas d'étape de traitement au calcium et comprend les étapes consistant à :
(1) soumettre de l'acier fondu à un décrassage et puis une fusion VOD, dans lequel la température initiale de l'acier fondu est de 1 600-1 650°C, et le degré de vide pendant la fusion VOD est < 100 Pa ;
(2) réaliser un traitement de décarburation par soufflage d'oxygène, dans lequel la quantité d'oxygène soufflé est contrôlée à 4-6,5 Nm³/t ;
(3) réaliser une désoxydation du carbone sous vide (VCD) dans une condition de vide élevé, dans lequel la pression de vide élevé est < 500 Pa ; dans lequel la durée du traitement de la décarburation sous vide est de 10-20 min, et après que le traitement de décarburation sous vide est achevé, la température de l'acier fondu est de 1 650-1 680°C ;
(4) réaliser une scorification et désoxygénation sous vide, dans lequel la basicité des scories définie comme un rapport de teneur de CaO/SiO₂ est 5-10, et le rapport en masse de CaO à Al₂O₃ dans les scories est de 1,6-2,4, dans lequel de la chaux, des billes de scorification composites, des blocs d'aluminium et du ferrosilicium sont utilisés pour la scorification et désoxygénation, dans lequel la composition des billes de scorification composites est constituée des constituants suivants : en pourcentage en masse, 30-40 % de Al₂O₃, 40-50 % de CaO, 5-20 % de SiO₂, et 6-12 % de MgO, dans lequel la quantité d'addition des billes de scorification composites est de 20-40 % de celle de la chaux, et dans laquelle la pression de vide est contrôlée à < 2 000 Pa et la durée de traitement est de 10-15 min ;
(5) réaliser une rupture sous vide, dans lequel des fils d'aluminium sont introduits dans cette étape, et dans lequel le pourcentage en masse d'aluminium est contrôlé à 0,03-0,06 % ;
(6) réaliser un traitement sous vide, dans lequel la pression de vide est < 2 000 Pa, la durée de traitement est de 5-15 min, et la température de l'acier fondu après que le traitement est achevé est de 1 560-1 580°C ; et
(7) réaliser une rupture sous vide secondaire ;
dans lequel dans les étapes (1), (3), (4) et (6), le débit de gaz d'argon pour une agitation par soufflage de fond est contrôlé à 200-1 000 NI/min.

2. Procédé de fusion pour un acier inoxydable 13Cr à très faible teneur en carbone selon la revendication 1, **caractérisé en ce qu'**un orifice de soufflage de fond utilisé dans une poche est configuré pour présenter deux orifices de soufflage de fond, dans lequel chaque orifice de soufflage de fond est positionné à une distance qui est 1/2-1/3 du rayon de la surface de fond de la poche en s'éloignant du centre de la poche, et l'angle inclus entre des lignes connectant chacun des deux orifices de soufflage de fond au centre de la poche est de 120-150°.

3. Procédé de fusion pour un acier inoxydable 13Cr à très faible teneur en carbone selon la revendication 1 ou 2, **caractérisé en ce que** l'acier inoxydable 13Cr à très faible teneur en carbone contient un élément de Ti, et l'étape (5) comprend de plus l'introduction de fils en titane dans cette étape.
